(19) Europäisches Patentamt
European Patent Office
Office européen des brevets

(11) **EP 1 081 938 A2**

(12) **EUROPEAN PATENT APPLICATION**

(43) Date of publication:
**07.03.2001 Bulletin 2001/10**

(51) Int. Cl.7: **H04N 1/48**

(21) Application number: **00202925.4**

(22) Date of filing: **21.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **02.09.1999 US 389181**

(71) Applicant: **EASTMAN KODAK COMPANY**
**Rochester, New York 14650 (US)**

(72) Inventor: **Scott, Kevin C.**
**Rochester, New York 14650-2201 (US)**

(74) Representative:
**Parent, Yves et al**
**KODAK INDUSTRIE,**
**Département Brevets,**
**CRT - Zone Industrielle**
**71102 Chalon-sur-Saône Cedex (FR)**

(54) **Scanner with automatic detection of film type**

(57)     A scanning system for scanning color film (30) of distinctive film types, each containing a plurality of color dyes representative of image content, comprises (a) a scanner for generating signals having separate channels corresponding to spectral sensitivities within the spectral absorption of each of the color dyes, and an additional channel corresponding to another spectral sensitivity within the spectral absorption of one of the color dyes; and (b) a processor for correlating signals from at least one of the separate channels and the additional channel to determine the type of film. More specifically, the processor correlates signals from a red channel within the spectral absorption of a cyan dye and an infra-red channel also within the spectral absorption of the cyan dye.

FIG. 3

Printed by Xerox (UK) Business Services
2.16.7 (HRS)/3.6

**Description**

The invention pertains to the digital processing of image data, and especially to data obtained from a film scanner.

Film scanners are available for the scanning of photographic film, including negative and reversal (slide) film. In both negative and reversal scanning, it is common for the scanner to deal with different types of film, e.g., in the case of slide films, both Kodachrome and Ektachrome slide films. After the scanner has scanned the film and produced digital scan data, processing of the digital scan data is ordinarily performed in order to obtain a result which is a desired representation of the original image in terms of color, sharpness and noise. Some of this processing, especially color processing, will depend on the type of film (e.g., Kodachrome or Ektachrome) that was scanned, that is, the digital data will be processed through color matrices and profiles that are appropriate for the combination of the scanner spectral response and the particular film type. Moreover, the color processing of scan data from reversal film should vary depending on film type because the spectral response of the scanner is typically much different than the color matching functions appropriate for these film types. A similar situation is possible with negative film, but to a lesser extent, since the eventual output print medium permits greater latitude for exposure errors and the use of automatic scene balancing will make an approximate correction for the aforementioned spectral differences.

In some existing scanning systems, an adjustment for film type can be manually entered to the scanner, e.g., by entering appropriate data during set-up of the scanner. Alternatively, U.S. Patent No. 5,412,737 describes a method for automatically identifying the presence of negative and positive slides by using a weighted average of the results of at least two of seven comparisons of darkness, brightness or transmission ratios between red, green, blue and luminance (where luminance is a weighted combination of red, green and blue). While automatic detection of film type would be desirable, this known technique is complex since it needs to utilize all the color channels in a multiplicity of tests. Since this technique also depends on the strong orange cast of color negative films, it is unclear that it would have the capability to distinguish between two categories of the same kind of film, e.g., between two reversal films.

Some film scanners (e.g., the Nikon LS-2000 film scanner) include all infrared (IR) channel for the purpose of locating and correcting defects such as scratches, dust and finger prints. Also see, for example, the scanning system described in U.S. Patent No. 5,266,805, which uses an infrared image to map the location, boundaries and intensities of media defects. Since a separate channel may help to avoid some of the problems inherent in the prior art due to overlapping dye sensitivities in the use of existing RGB channels, what is needed is a technique for automatic film type detection and identification that utilizes a separate channel, such as an infrared channel, to identify film type, and thereby avoid the need for manual input of film type, which can lead to errors in data entry or no data entry when the user is unaware of the film type.

If the absorption of a dye could be examined at two different spectral sensitivities that are not strongly influenced by the other dyes in the film, then it would appear possible to establish a more straightforward distinction between similar film types than can be done in existing systems. Accordingly, the current invention is based on use of an infrared channel (or any other spectrally distinct channel beyond the usual three RGB channels) to gain information of the spectral absorption of a dye in the scanned film, and from that, to classify the type of film being scanned. Such classification can then be used to select or modify subsequent digital image processing steps.

The present invention is directed to overcoming one or more of the problems set forth above. Briefly summarized, according to one aspect of the present invention, a scanning system for scanning color film of distinctive film types, each containing a plurality of color dyes representative of image content, comprises (a) a scanner for generating signals having separate channels corresponding to spectral sensitivities within the spectral absorption of each of the color dyes, and an additional channel corresponding to another spectral sensitivity within the spectral absorption of one of the color dyes; and (b) a processor for correlating signals from at least one of the separate channels and the additional channel to determine the type of film. More specifically, the processor correlates signals from a red channel within the spectral absorption of a cyan dye and an infra-red channel also within the spectral absorption of the cyan dye.

The invention provides a number of valuable technical advantages. It allows automatic scanning and processing; user intervention or awareness of film types is therefore unnecessary. Robust operation is promoted; the film type is determined based on the same physical characteristic (dye spectra) that drives the major need for film type-dependent image processing. Minimal computation is involved; in the preferred embodiment, a 2D histogram of the image is the only pixel processing needed. Furthermore, the invention correctly classifies film type across a reasonably large range of over/under exposure conditions in the original image as captured on film, and over a reasonably large range of exposure settings of the scanner.

These and other aspects, objects, features and advantages of the present invention will be more clearly understood and appreciated from a review of the following detailed description of the preferred embodiments and appended claims, and by reference to the accompanying drawings.

FIG. 1 is a diagram of a computer system incorporating a film scanner for implementing the present invention.

FIG. 2 is a diagram showing the absorption spectra of color dyes used in Kodachrome and Ektachrome color reversal films.

FIG. 3 is a block diagram of the scanner shown in Figure 1.

FIG. 4A is a diagram showing a two-dimensional histogram of the red and infrared densities typically found in Ektachrome color reversal films, which is used in the algorithm for distinguishing film type.

FIG. 4B is a diagram showing a two-dimensional histogram of the red and infrared densities typically found in Kodachrome color reversal films, which is used in the algorithm for distinguishing film type.

FIG. 5 is a flow chart showing implementation of film type correlation where the added channel is an infrared (or ultraviolet) channel.

FIG. 6 is a flow chart showing implementation of film type correlation where the added channel is an intermediate wavelength visible light channel.

FIG. 7 is a plot of representative infrared vs. red densities for Kodachrome and Ektachrome color reversal films, which illustrate the determination of a criterion for distinguishing film type.

Because scanning devices employing electronic sensors and image processing are well known, the present description will be directed in particular to elements forming part of, or cooperating more directly with, apparatus and method in accordance with the present invention. Elements not specifically shown or described herein may be selected from those known in the art. In the following description, the method for distinguishing film type will be described as a software, or computer, program. Those skilled in the art will readily recognize that the equivalent of such software may also be constructed in hardware. Certain other aspects of the embodiments to be described may also be provided in software. Given the system as described in the following materials, all such software implementation needed for practice of the invention is conventional and within the ordinary skill in such arts. Still further, as used herein, the computer program may be stored in a computer readable storage medium, which may comprise, for example; magnetic storage media such as a magnetic disk (such as a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program.

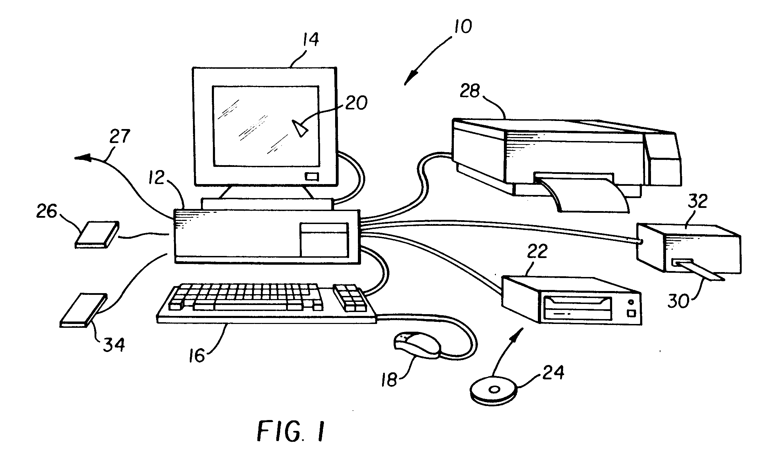

Referring to Fig. 1, there is illustrated a computer system 10 for implementing the present invention. Although the computer system 10 is shown for the purpose of illustrating a preferred embodiment of the scanner system, the present invention is not limited to the computer system 10 shown, but may be used on any electronic processing system. The computer system 10 includes a microprocessor-based unit 12 for receiving and processing software programs and for performing other processing functions. A display 14 is electrically connected to the microprocessor-based unit 12 for displaying user-related information associated with the software. A keyboard 16 is also connected to the microprocessor based unit 12 for permitting a user to input information to the software. As an alternative to using the keyboard 16 for input, a mouse 18 may be used for moving a selector 20 on the display 14 and for selecting an item on which the selector 20 overlays, as is well known in the art.

A compact disk-read only memory (CD-ROM) 22 is connected to the microprocessor based unit 12 for receiving software programs and for providing a means of inputting the software programs and other information to the microprocessor based unit 12 via a compact disk 24, which typically includes a software program. In addition, a floppy disk 26 may also include a software program, and is inserted into the microprocessor-based unit 12 for inputting the software program. Still further, the microprocessor-based unit 12 may be programmed, as is well known in the art, for storing the software program internally. The microprocessor-based unit 12 may also have a network connection 27, such as a telephone line, to an external network, such as a local area network or the Internet. A printer 28 is connected to the microprocessor-based unit 12 for printing a hardcopy of the output of the computer system 10.

For purposes of the present invention, images on a photographic film 30 are scanned into the computer system 10 by a scanner 32, and are stored in the microprocessor-based unit 12 and may also be displayed on the display 14. Images may also be input via a personal computer card (PC card) 34, such as, as it was formerly known, a PCMCIA card (based on the specifications of the Personal Computer Memory Card International Association) which contains digitized images electronically embodied in the card 34. The PC card 34 is ultimately inserted into the microprocessor based unit 12 for permitting visual display of the image on the display 14. Images may also be input via the compact disk 24, the floppy disk 26, or the network connection 27. Any images stored in the PC card 30, the floppy disk 26 or the computer disk 34, or input through the network connection 27, may have been obtained from a variety of sources, such as a digital camera (not shown) or from the scanner 32, which may have the capability of storing images directly on the respective PC card 30, the floppy disk 26 or the computer disk 34 (i.e., without requiring connection to the computer system 10).

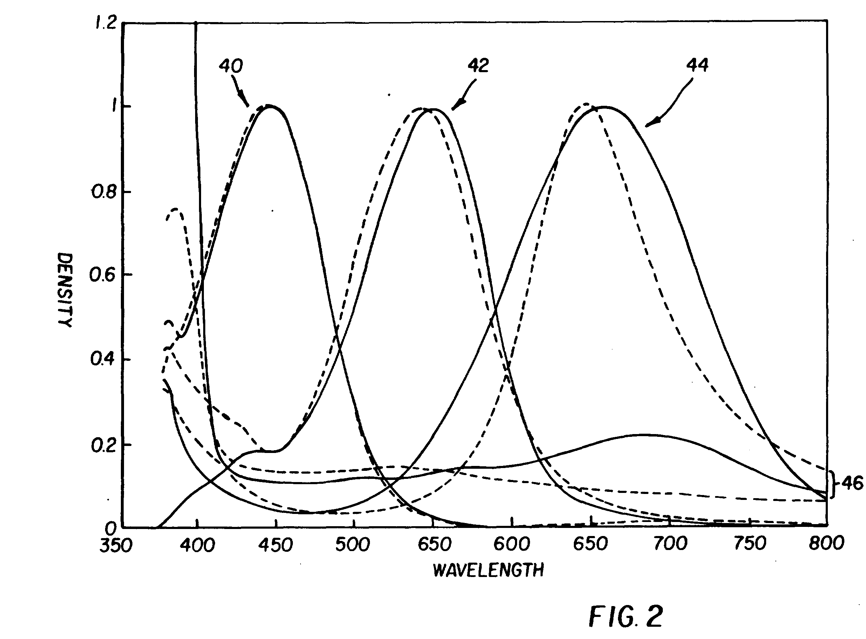

A primary objective of this invention is to evaluate and correlate absorption of a particular film dye at more than one spectral point, i.e., at more than one wavelength region in the absorption spectra and preferably at a point where the absorption is mostly affected by a single color dye. Each film type should have a distinctive absorption at least at one of these wavelength regions so that a correlation may be established which differs between the film types. Figure 2 shows the absorption curves 40, 42 and 44 for the yellow, magenta and cyan dyes, respectively, in Ektachrome (solid line) and Kodachrome (dashed line) films. From an inspection of Figure 2, it can be seen that a number of wavelengths could be chosen as candidates for practice of the invention: for example, the absorption of the Ektachrome cyan dye 44 at a wavelength of 600nm is almost 0.2 higher in density than the absorption of the Kodachrome cyan dye 44 at that same wavelength. Though the invention may be practiced at this wavelength, it would involve subtracting the effect of the magenta dye 42, which is also absorbing light at this wavelength. While it would not be particularly difficult to do this and thereby account for the unwanted magenta dye absorption, it would better to avoid the problem altogether by selecting another channel for observation.

It is known that Kodachrome's cyan dye 44 has more absorption of infrared light than Ektachrome's cyan dye 44, as shown in a region 46 in Figure 2, which would typically be measurable at a wavelength of around 800nm or greater. This is useful information, since a primary example of this invention is to classify slide film as either Kodachrome or Ektachrome. Within an image on the film, it is expected that the amount of each dye will ordinarily vary depending on position within the image; if none of the dyes vary across the image, the entire image would just be one solid color and would therefore contain little image information and be uninteresting to look at. So, assuming that some areas have lesser amounts of cyan dye while other areas have larger amounts, the scanned data will contain areas of low cyan as seen by the scanner's red and IR channels, and areas of high cyan as seen by the scanner's red and IR channels. From this, the correlation of the densities is calculated as seen by the IR scanner channel vs. the densities seen by the red scanner channel. The correlation value is thresholded to make the classification of film type.

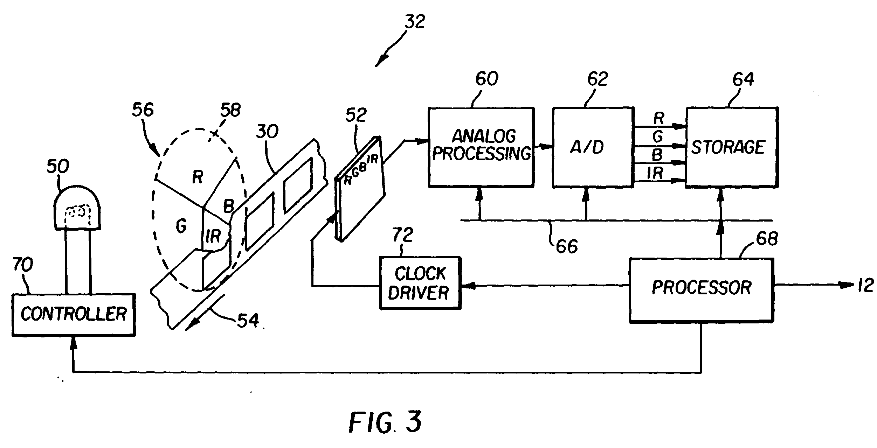

Referring now to Figure 3, the scanner 32 includes a lamp 50 for uniformly illuminating the film 30 in the red, green, blue and infrared spectra; the film 30 is positioned in a film gate (not shown) in the path of the light from the lamp 50. Light transmitting through the film 30 is directed toward an image sensor 52, which may be a conventional multi spectral-linear array (with separate RGB and IR linear sensors, as shown). For the illustrated linear array, the film 30 is transported past the sensor 52 in the direction of an arrow 54 to obtain the scanning effect. Alternatively, the color exposures may be taken sequentially either through a rotating color filter wheel 56 with separate color sectors 58 for red, green, blue and infra-red, or by having an illuminator composed of separate light emitting diodes (LEDs) that sequentially illuminate the film in the red, green, blue and infra-red spectra. (For a sequential exposure, an area array sensor would be used and the film would be momentarily stopped in front of the sensor 52 for each sequence of exposures constituting a complete image capture.) The analog scan signals from the sensor 52 are applied to an analog processing section 60, which performs sampling and signal processing of the scan signals, and then applied to a a/d converter 62, which generates 12-bit codevalues that are linearly proportional to transmittance of the film; a higher codevalue thus indicates a lighter color.

There are four channels (Red, Green, Blue, IR) in the scanned image output by the a/d converter 62; the codevalues are stored in a storage 64. A digital processor 68 is coupled through a data bus 66 to the storage 64 and the other components for controlling the scanner. In addition, the exposure of the scanner 32 is adjustable by means of a controller 70, which has a resulting effect very similar to multiplying the codevalues by a scale factor in each channel. The algorithm employed according to the invention is tolerant of wide variations in scanner exposure, although it is assumed that some care has been taken to avoid too-high an exposure so that clipping doesn't occur to any significant extent. Image capture is controlled by the processor 68 through a clock driver 72 connected to the sensor 52. The processor 68 is connected to the microprocessor-based unit 12, and user interface to the scanner 32 is obtained through the display14, the keyboard 16, the mouse 18 and the selector 20. The algorithm employed according to the invention is incorporated into the software driver that is input to the computer system 10, for example by the floppy disk 26, or is included in the processor 68 if the scanner 32 is capable of operating as a stand-alone unit (in which case, the scanner 32 would have its own user interface, which is not shown).

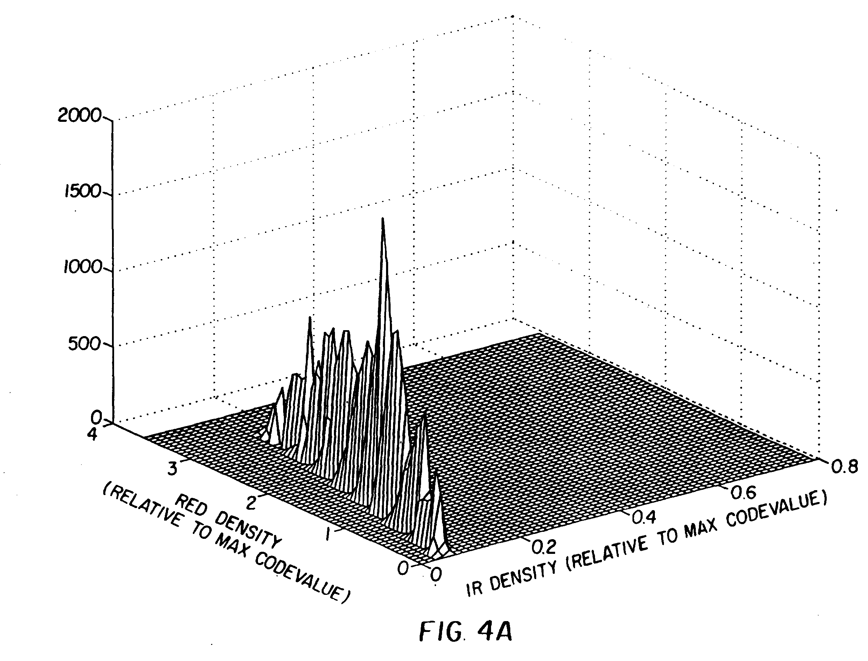

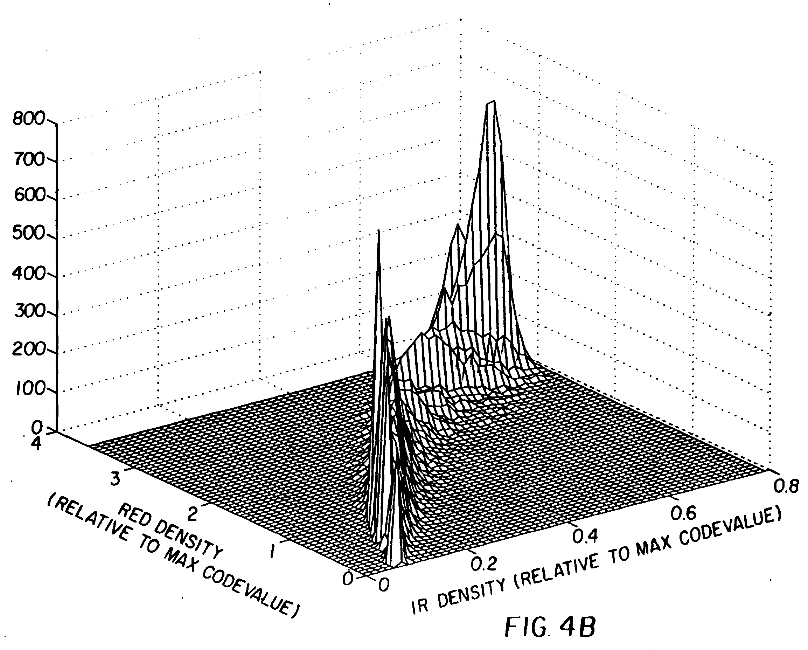

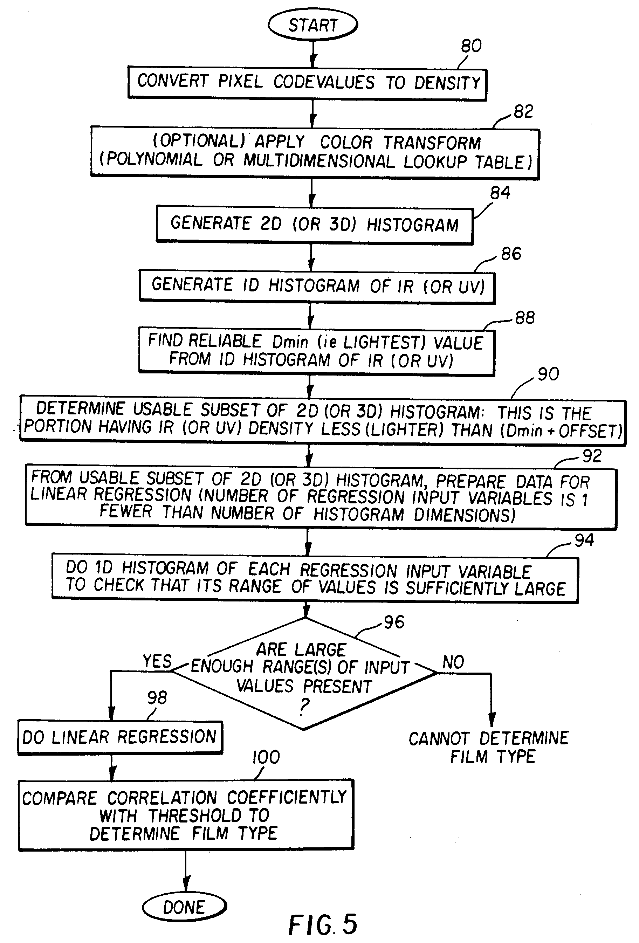

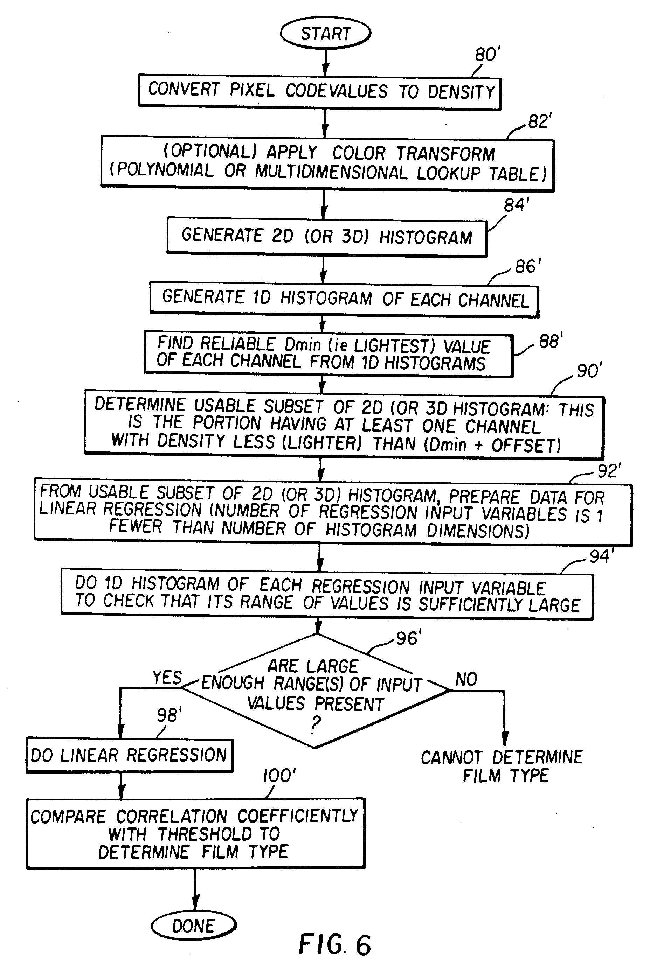

The preferred embodiment of this invention classifies the film type of a scanned slide film into two types, one of which is Ektachrome and the other is Kodachrome. The steps involved in arriving at this classification (for an infra-red channel) are outlined in Figure 5. Basically, the correlation between IR density and red density is calculated from a 2D histogram of red and infra-red densities, as shown in Figures 4A and 4B for Ektachrome and Kodachrome reversal films, respectively. This calculation will determine how well the scanner's IR channel "sees" the cyan dye. It is assumed that the scanner's red channel is a good indicator of how much cyan dye is actually present at each location within the image, i.e., the scanner's red is significantly absorbed by the expected cyan dye, and is relatively unaffected by absorptions from dyes other than cyan. If the scanner's red channel is affected by absorption from dyes other than cyan, a conventional color transform may be used as shown in block 82 in Figure 5. Such a transform produces an output that is an estimate of the cyan dye amounts for a chosen film type. Alternatively, as shown in blocks 84, 90 and 92, the histogram could be done in 3D and the regression could be performed to isolate the correlations to be from the individual dyes. The three inputs of the histogram would be the two on-peak channels (possibly color corrected) of the expected two surrounding color dyes, and the additional channel. Furthermore, the invention may be practiced with other channels and other slide films, including films manufactured by manufacturers other than Kodak, as well as with negative films. For example, Figure 6 show the steps involved, which are similar to and indicated with the same reference characters as used in Figure 5, in arriving at the film type classification by using an intermediate wavelength visible light channel. Moreover, as shown in Figure 5, the comparison could be between an ultraviolet (UV) channel and one of the channels corresponding to visible light.

Since both the red and IR images also show variation related to noise and defects (scratches, dust, fingerprints, etc.), a 2D histogram is used as a means to suppress nonrepresentative pixels. The 2D histogram is indexed by red density and IR density. On a pixel by pixel basis, the red and IR scanner codevalues are run through lookup tables in step 80 to convert to density. These densities are relative to the maximum scanner codevalue, and scaled as integers in equations (1) and (2) to index the 2D histogram and increment the proper bin in step 84. It turns out that a fairly aggressive quantization can be used without any harmful effects. Red densities [0...3.6] are scaled to indices [0...63], and IR densities [0...3.6] are scaled to indices [0...255]. This allows the memory size of the 2D histogram to remain reasonably small, at 16384 bins (i.e. 64 * 256).

$$\text{indexRed} = \text{round} \left( -\log_{10} (\text{cvRed}/4095) * 63/3.6 \right) \quad (1)$$

$$\text{indexIR} = \text{round} \left( -\log_{10} (\text{cvIR}/4095) * 255/3.6 \right) \quad (2)$$

The IR densities are maintained with higher precision because it is desirable to maintain smaller variations in the IR channel. This is apparent because the correlation values are small numbers, i.e. the IR delta-densities are small compared to the Red delta-densities.

There may be areas of the image where the Red and IR channels are both nearly black (high density), due to opaque objects such as a misregistered film holder, or a slide mount with smaller-than-normal image opening (e.g. APS slide), or pen markings on the slide, or pieces of black tape stuck to the film. This would tend to artificially produce a high correlation between red and IR, and would result in incorrectly classifying such scans. To avoid this problem, a global minimum-density (lightest) IR value (Dmin) is found in the image in step 88, preferably by making an overall 1D IR histogram in step 86 and ignoring the lowest-density 3% of occurrences. Then, when subsequently working with the 2D histogram in step 90, any bins that have an IR density more than 0.8 darker (i.e., offset = 0.8) than this global minimum IR density are ignored. The IR channel is used for this purpose because it has a smaller density range; it is observed that the IR density range (Dmax - Dmin) is always well under 0.8, within unobstructed areas of the image. If the scanner only has visible light channels, as indicated in Figure 6, a similar test would be done in step 90' in Figure 6 but the offset would be significantly larger, and such a test should preferably be performed on all the channels.

At any given red density, a row of the 2D histogram can be viewed as a 1D IR histogram among the subset of pixels having the specified red density. At a given red density, a usable subset of pixels is prepared in step 92 from "representative" IR densities; while different criteria can be used, in the preferred embodiment a "representative" IR density is calculated by ignoring the lowest 5% and highest 5% of occurrences. The average among all intermediate density items is then used as the representative IR density in step 92 for the regression. Occasionally, however, there could be an image with insufficient variation in the red densities. For example, the image might all be one solid color. In this case, the linear regression would produce unreliable results, or in an extreme case could fail due to a singularity. Therefore, before the regression is started, a 1D histogram of the red densities is made in step 94 and tested in step 96 to insure that there is a wide enough variation in the density values that the computed correlation value will be meaningful. This is done by scanning the 1D red histogram for minimum and maximum values, ignoring the highest and lowest 3% of occurrences. If the difference is too small between the minimum and maximum red density, e.g., if(max_densRed - min_densRed) < 1.0, a determination of film type is impossible, and instead a fixed (default) choice may be made (basically, a particular film type is assumed and the result of the selection is simply tolerated), or perhaps user input of the film type would be needed. Preferably, the 1D red histogram should be generated from the 2D histogram, ignoring any 2D bins with excessively dark IR density due to opaque objects, as discussed above.

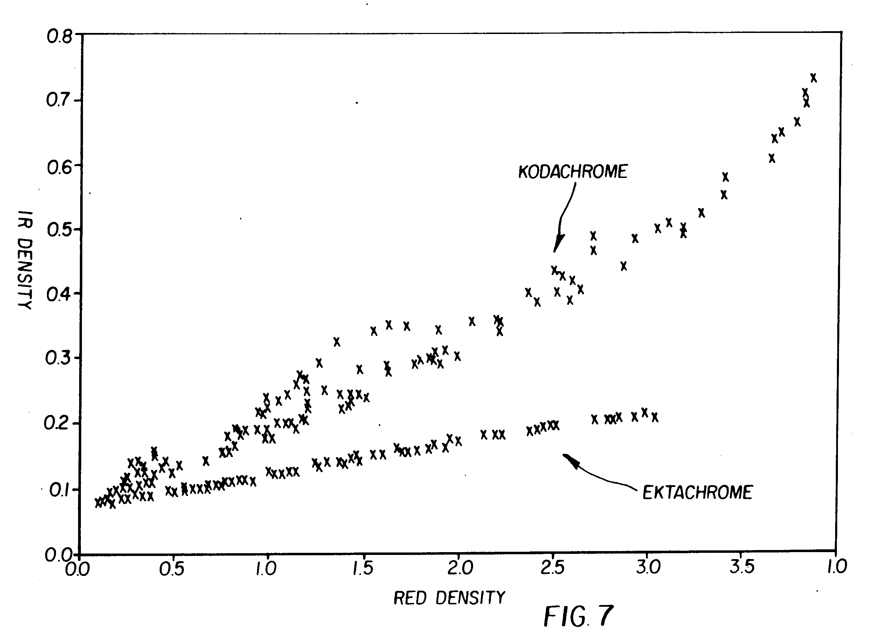

After completing the 2D histogram and selecting a usable subset of data for the regression, which is shown in the scatter chart in Figure 7 for various combinations of red and "representative" IR densities, a linear regression is implemented in step 98 to fit a line equation to the recorded densities:

$$Y = aX + b \qquad (3)$$

where Y = densIR = indexIR * 3.6/255, and X = densRed = indexRed * 3.6/63. In some embodiments, this might be done via a linear regression with a data item from every pixel in the image; however, it would be slow and memory intensive, and would lack the noise-suppression benefits of the 2D histogram. In the preferred embodiment, this is done by scanning through the completed 2D histogram, and at each discrete red density, computing the representative IR density as described above, and weighting it by its number of occurrences. This limits the number of data points in the linear regression to no more than the number of Red indices into the 2D histogram. From the linear regression, the slope (a) is used as the correlation coefficient in step 100. To determine the threshold used in step 100, a population of film samples are processed and their IR-to-Red density correlation examined. With the Nikon LS-2000 scanner, typical correlation values are:

Ektachrome: 0.043 to 0.052
Kodachrome: 0.096 to 0.206

A threshold is arbitrarily set at: threshold = 0.077. If the correlation < 0.077 in step 100, the film is classified as Ektachrome film; If the correlation ≥0.077, the film is classified as Kodachrome film. As a result of this determination, the subsequent image processing in the computer system 10 or in the scanner 32, which processing is not part of this invention, may then be adapted for the actual film type being scanned.

**Claims**

1. A scanning system for scanning color photographic media of different media types, each containing a plurality of color dyes representative of image content, said scanning system comprising:

    (a) a scanner that generates signals having separate channels corresponding to spectral sensitivities within the spectral absorption of each of the color dyes, and an additional channel corresponding to another spectral sensitivity within the spectral absorption of one of the color dyes; and
    (b) a processor for correlating signals from at least one of the separate channels and the additional channel to determine the type of media.

2. A scanning system as claimed in claim 1 wherein the different media types comprise two or more color reversal films.

3. A scanning system as claimed in claim 1 wherein the processor correlates signals from a red channel within the spectral absorption of a cyan dye and an infra-red channel also within the spectral absorption of the cyan dye to determine the type of media.

4. A method for distinguishing the film type of a color film containing a plurality of color dyes representative of image content, said method comprising the steps of:

    (a) scanning the color film;
    (b) generating scan signals in separate channels corresponding to spectral sensitivities within the spectral absorption of each of the color dyes, and an additional channel within the spectral absorption of one of the color dyes; and
    (c) correlating signals from at least one of the separate channels and the additional channel to determine the type of film.

5. A method as claimed in claim 4 wherein the color dye is a cyan dye, and said one of the separate channels is a red channel and said additional channel is an infra-red channel.

6. A method as claimed in claim 4 wherein the step (c) of correlating signals comprises generating a two dimensional histogram of signals from said one of the separate channels and said additional channel, and determining a correlation coefficient from the histogram.

7. A method as claimed in claim 6 further comprising the step of generating a usable subset of signals for the histogram by eliminating signals having extreme signal values.

8. A method as claimed in claim 6 further comprising the step of developing the correlation coefficient from a linear regression of representative signal values from the additional channel.

9. A method as claimed in claim 8 wherein the representative signal value is an average of a plurality of signal values from the additional channel that were accumulated in histogram bins for each given signal value from said one of the separate channels.

10. A method as claimed in claim 8 further comprising the step of developing the correlation coefficient from the slope of a line fitted to the representative signal values.

FIG. I

EP 1 081 938 A2

FIG. 2

EP 1 081 938 A2

FIG. 3

FIG. 4A

EP 1 081 938 A2

FIG. 4B

EP 1 081 938 A2

START

CONVERT PIXEL CODEVALUES TO DENSITY ⟋80

(OPTIONAL) APPLY COLOR TRANSFORM
(POLYNOMIAL OR MULTIDIMENSIONAL LOOKUP TABLE) ⟋82

GENERATE 2D (OR 3D) HISTOGRAM ⟋84

GENERATE ID HISTOGRAM OF IR (OR UV) ⟋86

FIND RELIABLE Dmin (ie LIGHTEST) VALUE
FROM ID HISTOGRAM OF IR (OR UV) ⟋88

DETERMINE USABLE SUBSET OF 2D (OR 3D) HISTOGRAM: THIS IS THE
PORTION HAVING IR (OR UV) DENSITY LESS (LIGHTER) THAN (Dmin + OFFSET) ⟋90

FROM USABLE SUBSET OF 2D (OR 3D) HISTOGRAM, PREPARE DATA FOR
LINEAR REGRESSION (NUMBER OF REGRESSION INPUT VARIABLES IS 1
FEWER THAN NUMBER OF HISTOGRAM DIMENSIONS) ⟋92

DO 1D HISTOGRAM OF EACH REGRESSION INPUT VARIABLE
TO CHECK THAT ITS RANGE OF VALUES IS SUFFICIENTLY LARGE ⟋94

ARE LARGE
ENOUGH RANGE(S) OF INPUT
VALUES PRESENT
? ⟋96

YES

NO

DO LINEAR REGRESSION ⟋98

CANNOT DETERMINE
FILM TYPE

COMPARE CORRELATION COEFFICIENTLY
WITH THRESHOLD TO
DETERMINE FILM TYPE ⟋100

DONE

FIG. 5

START

CONVERT PIXEL CODEVALUES TO DENSITY  80'

(OPTIONAL) APPLY COLOR TRANSFORM
(POLYNOMIAL OR MULTIDIMENSIONAL LOOKUP TABLE)  82'

GENERATE 2D (OR 3D) HISTOGRAM  84'

GENERATE 1D HISTOGRAM OF EACH CHANNEL  86'

FIND RELIABLE Dmin (ie LIGHTEST) VALUE
OF EACH CHANNEL FROM 1D HISTOGRAMS  88'

DETERMINE USABLE SUBSET OF 2D (OR 3D HISTOGRAM: THIS
IS THE PORTION HAVING AT LEAST ONE CHANNEL
WITH DENSITY LESS (LIGHTER) THAN (Dmin + OFFSET)  90'

FROM USABLE SUBSET OF 2D (OR 3D) HISTOGRAM, PREPARE DATA FOR
LINEAR REGRESSION (NUMBER OF REGRESSION INPUT VARIABLES IS 1
FEWER THAN NUMBER OF HISTOGRAM DIMENSIONS)  92'

DO 1D HISTOGRAM OF EACH REGRESSION INPUT VARIABLE
TO CHECK THAT ITS RANGE OF VALUES IS SUFFICIENTLY LARGE  94'

ARE LARGE
ENOUGH RANGE(S) OF INPUT
VALUES PRESENT
?  96'

YES

NO

DO LINEAR REGRESSION  98'

CANNOT DETERMINE
FILM TYPE

COMPARE CORRELATION COEFFICIENTLY
WITH THRESHOLD TO
DETERMINE FILM TYPE  100'

DONE

FIG. 6

FIG. 7